# EUROPEAN PATENT APPLICATION

(11) **EP 4 603 704 A2**
(43) Date of publication of application: **20.08.2025**
(21) Application number: 25157105.5
(22) Date of filing: 11.02.2025
(51) Int. Cl.: F04C 23/00

(54) **ACCUMULATOR FIXING MECHANISM AND COMPRESSOR**

(30) Priority: 14.02.2024 JP 2024020379
(71) Applicant: Carrier Japan Corporation, Tokyo (JP)
(72) Inventor: NOJIMA, Yasumitsu, Shizuoka (JP)
(74) Representative: Gramm, Lins & Partner Patent- und Rechtsanwälte PartGmbB

(57) **Abstract**

An accumulator fixing mechanism is for fixing an accumulator to a side of a compressor body, and comprises: a band formed in an elongated band-like shape; and a holder that is fixed to the compressor body and fixes the accumulator by holding both end portions of the band arranged along an outer circumference of the accumulator. The holder comprises: a fixing portion fixed to an outer circumferential surface of the compressor body; a folded-back portion that is provided near at least one end portion of the holder, extends toward the accumulator and is folded back toward the compressor body; and a recessed portion formed by notching an end portion of the folded-back portion. A ratio of a depth dimension of the recessed portion to a width dimension of the recessed portion is set to 0.4 or more. Alternatively, a ratio of a depth dimension of the recessed portion to a width dimension of the end portion is set to 0.3 or more.

## Description

### BACKGROUND OF THE INVENTION

### Field of the Invention

The present embodiment relates to an accumulator fixing mechanism and a compressor.

### Description of the Related Art

For example, some rotary compressors comprise an accumulator. The accumulator is usually fixed to a compressor body when in use. Conventionally, a fixing mechanism for fixing the accumulator to the compressor body uses, for example, a holder fixed to an outer surface of the compressor body by welding or the like and a band that is elastically deformable. In this case, an operator performs the fixation by manually wrapping the band around the accumulator and hooking the band onto the holder.

Patent Literature 1: Japanese Patent Laid-Open No. 2015-209809

However, in the conventional fixing mechanism, if the band is incompletely attached to the holder during assembly of the compressor, the band may be detached from the holder due to vibrations during transport or operation of the compressor, resulting in noises due to vibrations or dropping-off due to breakage of the accumulator.

Thus, an accumulator fixing mechanism that can inhibit a band from being detached from a holder, and a compressor comprising the accumulator fixing mechanism are to be provided.

### SUMMARY OF THE INVENTION

An accumulator fixing mechanism according to an embodiment is for fixing an accumulator to a side of a compressor body, and comprises: a band formed in an elongated band-like shape; and a holder that is fixed to the compressor body and fixes the accumulator by holding both end portions of the band arranged along an outer circumference of the accumulator. The holder comprises: a fixing portion fixed to an outer circumferential surface of the compressor body; a folded-back portion that is provided near at least one end portion of the holder, extends toward the accumulator and is folded back toward the compressor body; and a recessed portion formed by notching an end portion of the folded-back portion. A ratio (L/D1) of a depth dimension (L) of the recessed portion to a width dimension (D1) of the recessed portion is set to 0.4 or more. Alternatively, a ratio (L/D2) of a depth dimension (L) of the recessed portion to a width dimension (D2) of the end portion is set to 0.3 or more.

In addition, a compressor according to an embodiment comprises: the compressor body; the accumulator; and the accumulator fixing mechanism.

### BRIEF DESCRIPTION OF THE DRAWINGS

FIG. 1 is a diagram schematically showing an example of a compressor comprising an accumulator fixing mechanism according to an embodiment;
FIG. 2 is a sectional view shown along line X2-X2 in FIG. 1 for an example of a compressor comprising an accumulator fixing mechanism according to an embodiment, showing a configuration around the accumulator fixing mechanism in an enlarged scale;
FIG. 3 is a diagram showing, for an example of a compressor comprising an accumulator fixing mechanism according to an embodiment, a state where a locking portion of a band of the accumulator fixing mechanism is detached from a holder from the state of FIG. 2;
FIG. 4 is a front view showing an example of a holder for an example of an accumulator fixing mechanism according to an embodiment;
FIG. 5 is a sectional view of a holder shown along line X5-X5 of FIG. 4 for an example of an accumulator fixing mechanism according to an embodiment;
FIG. 6 is a front view showing an example of a holder and a band for an example of an accumulator fixing mechanism according to an embodiment; and
FIG. 7 is a front view showing another example of a holder for an example of an accumulator fixing mechanism according to an embodiment.

### DETAILED DESCRIPTION OF THE INVENTION

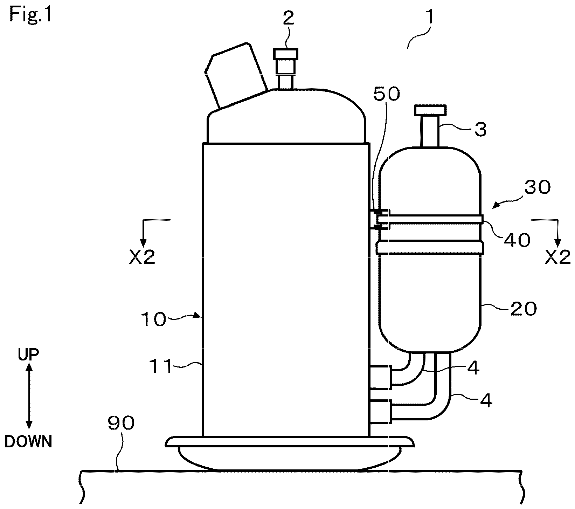

In the following, several embodiments will be described with reference to the drawings. A compressor 1 shown in FIG. 1 can be used as a component of a refrigeration cycle, for example. The compressor 1 is connected to external equipment such as an evaporator or condenser when in use, for example. The compressor 1 suctions a coolant flowing out of external equipment, compresses the coolant in the compressor 1, and supplies the coolant to external equipment, for example. The compressor 1 can be composed of a rotary compressor of a one-cylinder type with one compression chamber in a compressor body 10, or a two-cylinder type with two compression chambers, or a three-cylinder type with three compression chambers, for example.

As shown in FIG. 1, the compressor 1 comprises a discharge pipe 2, an inlet pipe 3, a suction pipe 4, a compressor body 10, an accumulator 20, and an accumulator fixing mechanism 30. Note that, in the following description, the accumulator fixing mechanism 30 may be referred to simply as a fixing mechanism 30. In addition, the compressor 1 shown in FIG. 1 is an example of a two-cylinder rotary compressor. The compressor 1 is installed in the orientation in FIG. 1 when in use, and the up-down direction on the paper of FIG. 1 is defined as the up-down direction of the compressor 1.

The compressor body 10 comprises a sealed container 11. The sealed container 11 is made of metal and formed in a cylindrical shape as a whole, for example. In the sealed container 11, a driving mechanism and a compression mechanism are incorporated and a coolant is charged, which are not shown in detail. The driving mechanism includes a motor and a cylinder and operates the compression mechanism. The compression mechanism is operated by the driving mechanism, and compresses the coolant in the sealed container 11 and discharges the coolant out of the sealed container 11. In this case, the discharge pipe 2 is connected to an upper portion of the sealed container 11 and extends out above the sealed container 11, for example.

The accumulator 20 has a function of temporarily storing the coolant flowing into the compressor body 10, accumulating the pressure of the coolant and releasing the pressure as necessary. The accumulator 20 is made of metal and is formed in a tubular shape as a whole, and is formed to be smaller than the compressor body 10, for example. The accumulator 20 is fixed to a side surface of the compressor body 10, floating from an installation surface 90 of the compressor 1. The inlet pipe 3 is connected to an upper portion of the accumulator 20, extends out above the accumulator 20 and is connected to external equipment not shown, for example.

The accumulator 20 and the compressor body 10 are connected by the suction pipe 4. The suction pipe 4 extends out from a bottom portion of the accumulator 20 and is connected to a lower portion of the outer side surface of the sealed container 11. During operation of the compressor body 10, the coolant in the compressor body 10 is compressed. Then, the compressed coolant is discharged out of the compressor body 10 from the discharge pipe 2 and is supplied to external equipment not shown.

In addition, the discharge of the coolant forms a negative pressure on the suction pipe 4 side of the compressor body 10. Thus, the coolant in the accumulator 20 is suctioned into the compressor body 10 through the suction pipe 4, and the coolant flowing out of external equipment not shown is suctioned from the inlet pipe 3 into the accumulator 20. Then, the coolant flowing into the accumulator 20 is adjusted to a certain pressure and supplied to the compressor body 10.

The fixing mechanism 30 has a function of removably attaching, that is, fixing the accumulator 20 to a side of the compressor body 10. The fixing mechanism 30 fixes the accumulator 20 to a side surface of the compressor body 10 with the accumulator 20 floating from the installation surface 90, that is, in an orientation in which the bottom portion of the accumulator 20 does not contact the installation surface 90.

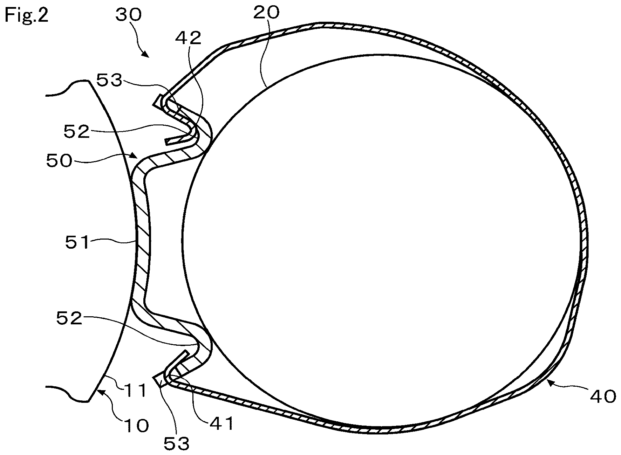

As shown in FIGS. 2 to 5, the fixing mechanism 30 comprises a band 40 and a holder 50. The band 40 is formed by bending an elongated band-like member that is longer in one direction, for example. The band 40 is formed in a shape that is bent into a curve with a curvature radius larger than the outer diameter of the accumulator 20, for example, with no external force acting on the band 40. In addition, the band 40 is composed of a member that is deformable to a certain extent along the outer circumferential surface of the accumulator 20 when the accumulator 20 is attached to the compressor body 10. The band 40 can be composed of an elastically deformable member such as spring steel, for example, or can also be composed of a different material.

The band 40 has a support portion 41 and a locking portion 42. The support portion 41 and the locking portion 42 are respectively provided at both end portions of the band 40. The support portion 41 is a portion that is fixed to the holder 50 prior to the locking portion 42 when the accumulator 20 is fixed to the compressor body 10. In addition, the support portion 41 is a portion that serves as a support of the band 40 when the band 40 is arranged along the outer circumferential surface of the accumulator 20.

The support portion 41 is formed in a shape in which one end portion of the band 40 is bent in a mountain fold toward the inside of the curve of the band 40, that is, toward the accumulator 20, for example. The locking portion 42 is a portion that is fixed to the holder 50 subsequent to the support portion 41 when the accumulator 20 is fixed to the compressor body 10. The locking portion 42 is configured to be more easily attached and detached to the holder 50 than the support portion 41. The locking portion 42 is formed in a shape in which an end portion of the band 40 opposite the support portion 41 is bent in a mountain fold toward the inside of the curve of the band 40, that is, toward the accumulator 20, and is thereafter bent in a valley fold in a direction away from the accumulator 20, for example. Note that either the support portion 41 or the locking portion 42 may also be configured to be fixed to the holder 50 with a screw or the like.

The holder 50 is fixed to the compressor body 10. In addition, the holder 50 has a function of fixing the accumulator 20 by holding both end portions of the band 40 arranged along the outer circumference of the accumulator 20, that is, the support portion 41 and the locking portion 42.

The holder 50 is made of metal such as stainless steel and is formed in a shape in which an elongated member is bent, for example. In this case, as shown in FIG. 1, the dimension of the holder 50 in the width direction is larger than the dimension of the band 40 in the width direction. Note that the dimensions of the band 40 and the holder 50 in the width direction refer to their dimensions in a direction perpendicular to the longitudinal direction of the band 40 and the holder 50, that is, their dimensions in the up-down direction in FIG. 1.

The holder 50 has a fixing portion 51, a folded-back portion 52, and a recessed portion 53. The fixing portion 51 is a portion provided in a region astride the center of the holder 50 in the longitudinal direction and fixed to the outer circumferential surface of the compressor body 10, that is, the outer circumferential surface of the sealed container 11. The fixing portion 51 is fixed to the outer circumferential surface of the compressor body 10 by welding or the like, for example.

The folded-back portion 52 is provided near at least one end portion of the holder 50. The folded-back portion 52 corresponds to at least the locking portion 42 of the band 40 and is configured to be capable of locking the locking portion 42. The folded-back portion 52 is provided in a region from a boundary portion of the fixing portion 51 to an end portion of the band 40. The folded-back portion 52 is formed in a shape in which it extends from the boundary portion of the fixing portion 51 toward the accumulator 20 and is then folded back toward the compressor body 10.

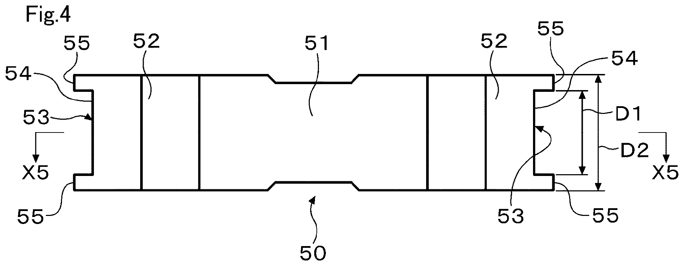

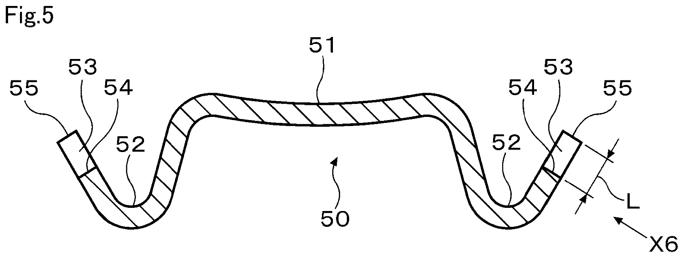

In the case of the present embodiment, folded-back portions 52 are respectively provided at both end portions of the holder 50. In addition, the folded-back portions 52 are configured such that both the support portion 41 and the locking portion 42 of the band 40 can be attached thereto. In this case, as shown in FIGS. 4 and 5, the holder 50 can be formed in a shape that is symmetrical with respect to the center of the holder 50 in the longitudinal direction, for example.

The recessed portion 53 is formed by notching an end portion of the folded-back portion 52. That is, as shown in FIG. 4, the recessed portion 53 is formed in a notched shape in which both width-direction edges of the holder 50 are notched in the longitudinal direction of the holder 50. Here, defining the bottom of the recessed portion 53 as a bottom portion 54, protruding portions 55 protruding from the bottom portion 54, which is the bottom of the recessed portion 53, toward the outside of the holder 50 in the longitudinal direction are formed on both sides of the band 40 in the width direction with respect to the recessed portion 53.

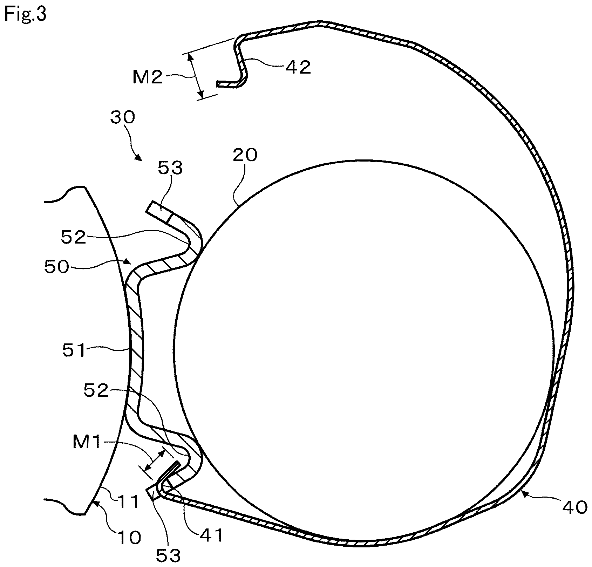

In this configuration, an operator can fix the accumulator 20 to the compressor body 10 in the following manner. That is, when fixing the accumulator 20 to the compressor body 10, the operator first hooks the support portion 41 of the band 40 onto one folded-back portion 52 of the holder 50, as shown in FIG. 3. The operator arranges the band 40 to be wrapped around the outer circumferential surface of the accumulator 20 while bending the band 40 by using the support portion 41 of the band 40 as a support.

Then, the operator hooks the locking portion 42 of the band 40 onto one folded-back portion 52 of the holder 50, as shown in FIG. 2. At this time, the operator positions the locking portion 42 inside the recessed portion 53, that is, inside the protruding portion 55. In this manner, the locking portion 42 fits inside the recessed portion 53, and thus movements of the locking portion 42 in the horizontal direction and the up-down direction are restricted, as a result of which the accumulator 20 is fixed to the compressor body 10.

In addition, the operator can detach the accumulator 20 from the compressor body 10 by performing a procedure reversed from that mentioned above. That is, when detaching the accumulator 20 from the compressor body 10, the operator holds a portion near the locking portion 42 in the state of FIG. 2, and moves the locking portion 42 in a direction away from the holder 50 to open the band 40. Then, as shown in FIG. 3, the locking portion 42 is detached from the recessed portion 53. In this manner, the locking of the locking portion 42 is released, and the accumulator 20 can be detached from the compressor body 10.

Here, the operation of hooking or detaching the locking portion 42 of the band 40 onto or from the folded-back portion 52 of the holder 50 requires a relatively large force since it is necessary to elastically deform the entire band 40 by using the support portion 41 as a support. Thus, the holder 50 in the present embodiment is formed in a shape that is symmetrical with respect to the center of the holder 50 in the longitudinal direction. In this manner, the operator can hook the support portion 41 and the locking portion 42 of the band 40 onto either of the two folded-back portions 52 of the holder 50. Therefore, the operator can change the attachment orientation of the band 40 according to his/her dominant hand.

In other words, in the operation of attaching the band 40 to the holder 50 to fix the accumulator 20 to the compressor body 10, the operator typically performs the operation from the opposite side to the compressor body 10 with respect to the accumulator 20, for example, that is, from the right side on the paper of FIGS. 1 to 3. In this case, if the operator is right-handed, for example, as shown in FIG. 3, the operator hooks the support portion 41 of the band 40 onto the folded-back portion 52 on the left side when facing toward the holder 50, that is, on the lower side on the paper of FIG. 3, and then hooks the locking portion 42 of the band 40 onto the folded-back portion 52 on the right side when facing toward the holder 50, that is, on the upper side on the paper of FIG. 3. In this case, it is easy for the operator to handle the locking portion 42 by the right hand, which is the dominant hand.

Conversely, if the operator is left-handed, for example, contrary to FIG. 3, the operator hooks the support portion 41 of the band 40 onto the folded-back portion 52 on the right side when facing toward the holder 50, that is, on the upper side on the paper of FIG. 3, and then hooks the locking portion 42 of the band 40 onto the folded-back portion 52 on the left side when facing toward the holder 50, that is, on the lower side on the paper of FIG. 3. In this case, it is easy for the operator to handle the locking portion 42 by the left hand, which is the dominant hand.

Thus, according to the accumulator fixing mechanism 30 in the present embodiment, it is easy for the operator to handle the locking portion 42 by his/her dominant hand, whether the operator is right-handed or left-handed. As a result, the operation is easily performed by the dominant hand, which can reduce misoperations.

According to the above-described embodiment, the fixing mechanism 30 is for fixing the accumulator 20 to a side of the compressor body 10. The fixing mechanism 30 comprises the band 40 and the holder 50. The band 40 is formed in an elongated band-like shape. The holder 50 is fixed to the compressor body 10. The holder 50 fixes the accumulator 20 to the compressor body 10 by holding the locking portion 42, which are both end portions of the band 40 arranged along the outer circumference of the accumulator 20.

The holder 50 has the fixing portion 51, the folded-back portion 52, and the recessed portion 53. The fixing portion 51 is a portion fixed to the outer circumferential surface of the compressor body 10. The folded-back portion 52 is provided near at least one end portion of the holder 50, and is formed in a shape in which it extends toward the accumulator 20 and is folded back toward the compressor body 10. The recessed portion 53 is formed by notching an end portion of the folded-back portion 52.

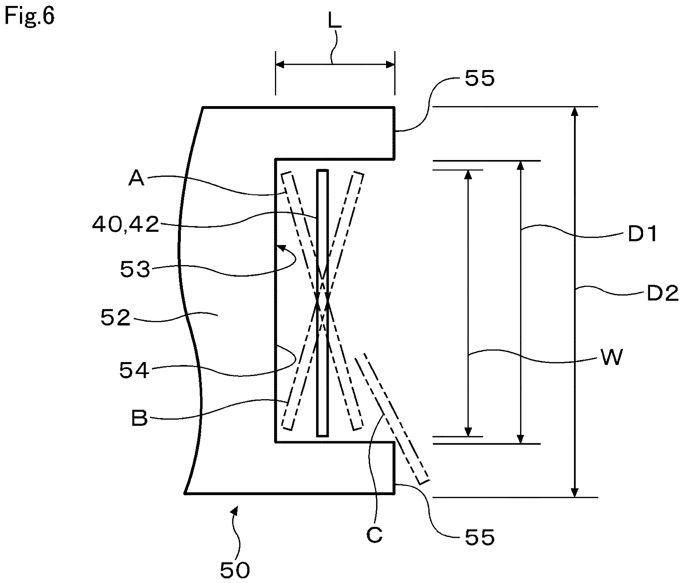

Here, with reference to FIG. 6, the principle on which the locking portion 42 is detached from the recessed portion 53 due to vibrations, is described. Note that dash-dot-dot lines A, B in FIG. 6 indicate how t the locking portion 42 vibrates. In addition, dash-dot-dot line C in FIG. 6 indicates how the locking portion 42 overrides the protruding portion 55. In the following description, the dimension of the recessed portion 53 of the holder 50 in the width direction is defined as a recessed portion width dimension D1, the dimension of the end portion of the holder 50 in the width direction is defined as an end portion width dimension D2, and the dimension of the recessed portion 53 of the holder 50 in the longitudinal direction is defined as a recessed portion depth dimension L.

Note that, as shown in FIG. 6, the dimension W of the band 40 in the width direction, that is, the dimension W of the locking portion 42 in the width direction is set to be slightly smaller than the recessed portion width dimension D1 such that the locking portion 42 easily fits into the recessed portion 53 and to such an extent that the locking portion 42 does not largely rattle with respect to the recessed portion 53.

Here, if the fixation of the band 40 to the holder 50 is incomplete, such as if the fitting of the locking portion 42 into the recessed portion 53 is shallow, or if there are large vibrations during transport or operation of the compressor 1, for example, the locking portion 42 vibrates as indicated by dash-dot-dot lines A, B in FIG. 6, for example, due to those vibrations. In this case, if the depth dimension L of the recessed portion 53 is small relative to the vibration amplitude of the locking portion 42, the locking portion 42 overrides the protruding portion 55 as indicated by dash-dot-dot line C in FIG. 6.

If the vibrations continue with t the locking portion 42 overriding the protruding portion 55, the locking portion 42 moves downward due to the vibrations and the weight of the band 40 itself. Finally, the locking portion 42 goes over the protruding portion 55 and is detached from the recessed portion 53, and as a result, the accumulator 20 drops off of the compressor body 10. In this case, increasing the depth dimension L of the recessed portion 53 makes the locking portion 42 less prone to be detached from the recessed portion 53. However, if the depth dimension L of the recessed portion 53 is excessively increased, it is necessary to largely deform the band 40 when releasing the locking of the locking portion 42, which lowers workability.

Thus, the inventor of the present application has experimentally found appropriate dimensional relationships for the band 40 and the holder 50. That is, the inventor of the present application has found that, by setting the ratio L/D1 of the recessed portion depth dimension L to the recessed portion width dimension D1 to 0.4 or more, the locking portion 42 is less prone to override the protruding portion 55 even when the locking portion 42 vibrates. Similarly, the inventor of the present application has found that, by setting the ratio L/D2 of the recessed portion depth dimension L to the end portion width dimension D2 to 0.3 or more, the locking portion 42 is less prone to override the protruding portion 55 even when the locking portion 42 vibrates.

In addition, the inventor of the present application has found that, by setting either one or both of the ratio L/D1 of the recessed portion depth dimension L to the recessed portion width dimension D1 and the ratio L/D2 of the recessed portion depth dimension L to the end portion width dimension D2 to 1.0 or less, it is possible to detach the locking portion 42 from the recessed portion 53 without excessively deforming the band 40.

Note that the recessed portion depth dimension L of the holder 50 can be set to 5 mm or more and 10 mm or less, for example. In this case, if the recessed portion depth dimension L is 5 mm, the recessed portion width dimension D1 is set to 5 mm or more and 12.5 mm or less, and the end portion width dimension D2 is set to 5 mm or more and 50/3 mm or less. Alternatively, if the recessed portion depth dimension L is 10 mm, the recessed portion width dimension D1 is set to 10 mm or more and 25 mm or less, and the end portion width dimension D2 is set to 10 mm or more and 100/3 mm or less.

In addition, in the present embodiment, as shown in FIG. 3, the depth dimension M1 of the bending of the support portion 41 and the depth dimension M2 of the bending of the locking portion 42 of the band 40 are set in a range from 0.8 times to 1.3 times the recessed portion depth dimension L of the recessed portion 53. In this manner, it is possible to ensure a sufficient holding force to keep the band 40 attached to the holder 50 while making it easy for the operator to recognize when a state of insufficient attachment occurs due to a misoperation, which can reduce misoperations during the attachment operation.

According to the above-described embodiment, the fixing mechanism 30 is for fixing the accumulator 20 to a side of the compressor body 10. The fixing mechanism 30 comprises the band 40 formed in an elongated band-like shape and the holder 50. The holder 50 is fixed to the compressor body 10. The holder 50 fixes the accumulator 20 by holding the support portion 41 and the locking portion 42, which are both end portions of the band 40 arranged along the outer circumference of the accumulator 20.

The holder 50 has the fixing portion 51, the folded-back portion 52, and the recessed portion 53. The fixing portion 51 is fixed to the outer circumferential surface of the compressor body 10. The folded-back portion 52 is provided near at least one end portion of the holder 50, and is formed in a shape in which it extends toward the accumulator 20 and is folded back toward the compressor body 10. The recessed portion 53 is formed by notching an end portion of the folded-back portion 52.

In addition, in the fixing mechanism 30, the ratio L/D1 of the depth dimension L of the recessed portion 53 to the width dimension D1 of the recessed portion 53 is set to 0.4 or more.

In this manner, it is possible to inhibit the locking portion 42 from overriding the protruding portion 55 when the compressor 1 undergoes vibrations due to transport or operation and, as a result, to inhibit the band 40 from being detached from the holder 50. In addition, this can prevent a state of incomplete assembly such as a misalignment during the attachment operation.

In addition, in the fixing mechanism 30, the ratio L/D2 of the depth dimension L of the recessed portion 53 to the width dimension D2 of the recessed portion 53 is set to 0.3 or more.

In this manner as well, it is possible to inhibit the locking portion 42 from overriding the protruding portion 55 when the compressor 1 undergoes vibrations due to transport or operation and, as a result, to inhibit the band 40 from being detached from the holder 50.

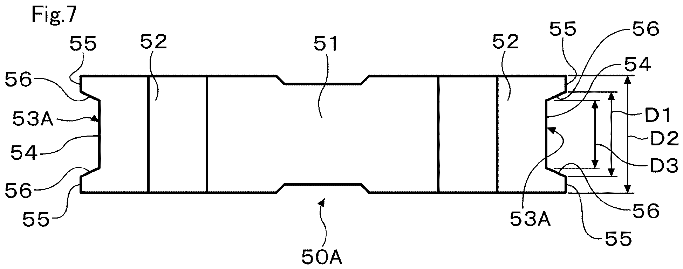

The holder 50 of the fixing mechanism 30 can be modified as shown in FIG. 7, for example. A holder 50A shown in the example of FIG. 7 has a recessed portion 53A. The recessed portion 53A is formed in a trapezoidal shape in which its width dimension decreases from both ends of the holder 50A toward its center in the longitudinal direction. In this case, defining the width dimension D1 of the recessed portion 53A as the distance between the two protruding portions 55, the width dimension D3 of the bottom portion 54 at the bottom of the recessed portion 53A is set to be smaller than the width dimension D1 of the recessed portion 53A.

In this configuration as well, it is possible to achieve operational effects similar to those in the configurations of FIGS. 1 to 6 described above. Further, since edges 56 on both sides of the recessed portion 53A are inclined in a tapered shape, when fitting t the locking portion 42 into the recessed portion 53A and when detaching the locking portion 42 from the recessed portion 53A, it is easy for the operator to move the locking portion 42 along the edges 56 with the tapered shape. This improves the workability for fitting the locking portion 42 into the recessed portion 53A and detaching the locking portion 42 from the recessed portion 53A.

While the present disclosure has been described in accordance with the embodiments, it is to be understood that the present disclosure is not limited to the embodiments and structures. The present disclosure encompasses various modifications as well as variations within the scope of equivalents. In addition, various combinations and forms as well as other combinations and forms including only one or more or less elements in addition to those fall within the scope and concept of the present disclosure.

## Claims

1. An accumulator fixing mechanism (30) for fixing an accumulator (20) to a side of a compressor body (10), comprising:
a band (40) formed in an elongated band-like shape; and
a holder (50, 50A) that is fixed to the compressor body and fixes the accumulator by holding both end portions of the band arranged along an outer circumference of the accumulator, wherein
the holder comprises:
a fixing portion (51) fixed to an outer circumferential surface of the compressor body;
a folded-back portion (52) that is provided near at least one end portion of the holder, extends toward the accumulator and is folded back toward the compressor body; and
a recessed portion (53, 53A) formed by notching an end portion of the folded-back portion, and
a ratio (L/D1) of a depth dimension (L) of the recessed portion to a width dimension (D1) of the recessed portion is set to 0.4 or more, or a ratio (L/D2) of a depth dimension (L) of the recessed portion to a width dimension (D2) of the end portion is set to 0.3 or more.

2. The accumulator fixing mechanism according to claim 1, wherein
the recessed portion is formed in a trapezoidal shape in which its width dimension decreases from both ends of the holder toward a center of the holder in a longitudinal direction.

3. A compressor (1) comprising:
the compressor body;
the accumulator; and
the accumulator fixing mechanism according to claim 1 or 2.
